# EUROPÄISCHE PATENTANMELDUNG

(11) **EP 1 454 697 A2**
(43) Veröffentlichungstag der Anmeldung: **08.09.2004**
(21) Anmeldenummer: 04005359.7
(22) Anmeldetag: 05.03.2004
(51) Int. Cl.: B23K 7/00, B23K 7/10

(54) **Brennschneidmaschine mit einer Führungsschiene und Vorrichtung zum Ausrichten derselben**

(30) Priorität: 05.03.2003 DE 10309793
(71) Anmelder: Messer Cutting & Welding GmbH, 64823 Gross-Umstadt (DE)
(72) Erfinder: Staudinger, Ingo, 64739 Höchst Hassenroth (DE); Esser, Heinz, 65428 Rüsselsheim (DE); Blumhoff, Detlef, 64720 Michelstadt (DE)
(74) Vertreter: Staudt, Armin, Dipl.-Ing.

(57) **Zusammenfassung**

Es ist eine Brennschneidmaschine bekannt, mit einem verfahrbaren Maschinenportal, das eine Montagefläche aufweist, an der eine vertikal und horizontal ausgerichtete Führungsschiene, entlang der mindestens ein thermisches Bearbeitungswerkzeug senkrecht zur Fahrtrichtung reversierend beweglich geführt wird, und die mittels Befestigungsschrauben, die in einer entlang der Schienen-Längsachse verlaufenden Schraubenreihe angeordnet sind, befestigt ist. Um eine Brennschneidmaschine dieser Gattung so weiterzubilden, dass das Ausrichten der Führungsschiene und das Nachjustieren mit geringerem Zeit- und Kostenaufwand bewerkstelligt werden kann, wird erfindungsgemäß vorgeschlagen, dass die Führungsschiene (13; 14) mittels der Befestigungsschrauben (24) in einer senkrecht zur Montagefläche (25) stehenden Kippebene verkippbar an der Montagefläche (25) gehalten wird, und dass zur Ausrichtung der Führungsschiene (13; 14) in der Kippebene Abdrückschrauben (28) entlang der Schraubenreihe vorgesehen sind, welche die Führungsschiene (13; 14) gegen Montagefläche (25) und Befestigungsschrauben (24) abdrücken.

## Beschreibung

Die Erfindung betrifft eine Brennschneidmaschine mit einem verfahrbaren Maschinenportal, das eine Montagefläche aufweist, an der eine vertikal und horizontal ausgerichtete Führungsschiene, entlang der mindestens ein thermisches Bearbeitungswerkzeug senkrecht zur Fahrtrichtung reversierend beweglich geführt wird, und die mittels Befestigungsschrauben, die in einer entlang der Schienen-Längsachse verlaufenden Schraubenreihe angeordnet sind, befestigt ist.

Derartige Brennschneidmaschinen werden verwendet, um in Metallplatten hochpräzise Schnitte zu erzeugen, die in definierten Winkellagen oder parallel zueinander verlaufen. Das Maschinenportal besteht im Wesentlichen aus zwei auf parallelen Schienen verfahrbaren Kreuzwagen und einem Querholm, der sich zwischen den Kreuzwagen erstreckt und der mittels der Kreuzwagen in vertikaler Richtung oder in horizontaler Richtung verfahrbar ist. Die Länge des Querholms bestimmt die maximale Breite der zu bearbeitenden Metallplatte. An dem Querholm ist mindestens eine Führungsschiene befestigt, an der ein oder mehrere thermische Bearbeitunsgwerkzeuge in Richtung senkrecht zur Fahrtrichtung des Maschinenportals bewegbar geführt sind. Vor der Inbetriebnahme der Brennschneidmaschine muss die Führungsschiene genau vertikal und horizontal ausgerichtet werden, damit Schnitte mit exakter Winkelausrichtung erhalten werden können.

Eine Brennschneidmaschine der eingangs genannten Gattung ist aus der DE 197 39 234 C2 bekannt. Um eine exakte Ausrichtung der Führungsschiene zu erreichen und ein Verziehen während des Betriebes zu vermeiden, wird vorgeschlagen, den Querholm mit den beiden Kreuzwagen zu verschweißen und erst nach dem Verschweißen auf dem Querholm eine Montagefläche für das Führungselement auszubilden, indem die entsprechende Fläche überfräst wird, wobei die Fräse exakt senkrecht zur Laufrichtung der Kreuzwagen bewegt wird. Auf der so geschaffenen Montagefläche wird anschließend die Führungsschiene angeschraubt.

An die Genauigkeit der Montagefläche hinsichtlich Orientierung und Planheit sowie an die Maßhaltigkeit der Führungsschiene werden dabei hohe Anforderungen gestellt. Die bekannte Vorrichtung erfordert nicht nur eine zeit und kostenaufwändige Bearbeitung der Montagefläche, sondern konsequenterweise auch eine entsprechende exakte Bearbeitung der Führungsschienen. Insbesondere bei Führungsschienen großer Länge erfordert die einzustellende Maßhaltigkeit und Winkelgenauigkeit den Einsatz von Sonderanfertigungen des Halbzeugs und hochpräziser Spezialwerkzeuge für deren Bearbeitung.

Bei der bekannten Brennschneidmaschine macht das Ausrichten der Führungsschiene und der damit verbundene Zeit- und Materialaufwand einen beachtlichen Teil der Gesamtkosten aus. Darüber hinaus muss auch im Verlaufe des Betriebes der Brennschneidmaschine die Ausrichtung des Maschinenportals in Bezug auf die Führungsschiene in gewissen Abständen überprüft und korrigiert werden, zum Beispiel, wenn sich die Brennschneidmaschine infolge ihres Einsatzes verzogen hat. Zur Kompensation wird die Führungsschiene in der Regel mit dünnen Folienstreifen untergelegt. Diese Kompensationsmöglichkeit ist aber auf eine Richtung beschränkt. Das Nachjustieren der Führungsschiene ist daher besonders aufwändig.

Der Erfindung liegt daher die Aufgabe zugrunde, eine Brennschneidmaschine der eingangs genannten Gattung so weiterzubilden, dass das Ausrichten der Führungsschiene und das Nachjustieren mit geringerem Zeit- und Kostenaufwand bewerkstelligt werden kann.

Weiterhin liegt der Erfindung die Aufgabe zugrunde, eine geeignete Vorrichtung zum Ausrichten der Führungsschiene einer erfindungsgemäßen Brennschneidmaschine anzugeben.

Hinsichtlich der Brennschneidmaschine wird diese Aufgabe ausgehend von der gattungsgemäßen Brennschneidmaschine erfindungsgemäß dadurch gelöst, dass die Führungsschiene mittels der Befestigungsschrauben in einer senkrecht zur Montagefläche stehenden Kippebene verkippbar an der Montagefläche gehalten wird, und dass zur Ausrichtung der Führungsschiene in der Kippebene Abdrückschrauben entlang der Schraubenreihe vorgesehen sind, welche die Führungsschiene gegen Montagefläche und Befestigungsschrauben abdrücken.

Bei der erfindungsgemäßen Brennschneidmaschine wird die Führungsschiene verkippbar an der Montagefläche gehalten. Die Kipprichtung liegt in einer Kippebene, die senkrecht zur Montagefläche und senkrecht zur Schienen-Längsachse verläuft. Zwischen der Montagefläche und der Führungsschiene ist somit ein gewisser Spalt ausgebildet, der ein Verkippen in der Kippebene ermöglicht und ein Einstellen eines vorgegebenen Kippwinkels ermöglicht. Der Kippwinkel wird mittels Abdrückschrauben so eingestellt, dass die Führungsschiene und die daran ausgebildeten Führungsflächen exakt vertikal oder horizontal verlaufen. Hierzu sind Abdrückschrauben vorgesehen, welche entlang der Schraubenreihe verlaufen, und die sich gegen Montagefläche und Führungsschiene abdrücken. Die Gewinde für die Abdrückschrauben können beispielsweise am Maschinenportal und/oder in der Führungsschiene selbst ausgebildet sein. Mittels der Abdrückschrauben wird die Führungsschiene in der Kippebene durch Abdrücken gegen Montagefläche und Befestigungsschrauben eingestellt und fixiert.

Im Unterschied zur bekannten Brennschneidmaschine erfolgt die Ausrichtung der Führungsschiene bei der erfindungsgemäßen Brennschneidmaschine somit nicht durch flächige Anlage an der zuvor exakt bearbeiteten Montagefläche, sondern durch Einstellen der Winkellage mittels der Abdrückschrauben. Eine aufwändige Bearbeitung der Kontaktflächen von Führungsschiene und Montagefläche ist somit nicht erforderlich, zumal zwischen den beiden Bauteilen ein Spalt verbleibt. Die Fixierung der Führungsschiene an der Montagefläche erfolgt durch die Befestigungsschrauben und die gegen den Druck der Befestigungsschrauben an der Montagefläche oder an der Führungsschiene anliegenden Abdrückschrauben.

Diese Art der Ausrichtung und Fixierung der Führungsschienen erlaubt es, handelsübliche Bauteile zu verwenden, die keiner oder allenfalls einer geringfügigen Nachbearbeitung bedürfen. Auch auf eine besonders exakte Bearbeitung der Montagefläche kann verzichtet werden, ebenso wie auf das Unterlegen von Folienstreifen oder anderer Justage-Hilfsmittel zwischen Führungsschiene und Montagefläche. Darüber hinaus kann auch im Falle einer Nachjustierung die exakte Orientierung der Führungsschiene vergleichsweise einfach mittels der Abdrückschrauben wieder hergestellt werden. Insbesondere ist eine Kompensation in mehreren Richtungen (nach vorne/nach hinten) möglich, und nicht nur in einer Richtung, wie im Falle einer flächigen Anlage der Führungsschiene durch Unterlegen von Folienstreifen.

Die exakte Ausrichtung der Führungsschiene ist daher bei der erfindungsgemäßen Brennschneidmaschine mit weitaus geringerem Material-, Kosten- und Zeitaufwand verbunden. Darüber hinaus können insbesondere für die Führungsschiene Bauteile eingesetzt werden kann, die vergleichsweise geringen Anforderungen an die Oberflächengüte und Maßhaltigkeit genügen.

Die Befestigungsschrauben sind entlang der Führungsschiene in einer Schraubenreihe angeordnet. Die Schraubenreihe muss nicht zwangsläufig geradlinig verlaufen; sie kann auch zick-zack-förmig oder mäanderförmig, usw., ausgebildet sein. Wesentlich ist, dass die Schraubenlinie noch ein Verkippen der Führungsschiene in der Kippebene ermöglicht, so dass ein Ausrichten der Führungsschiene in der Kippebene durch die Abdrückschrauben erreicht werden kann.

Unter einer Brennschneidmaschine im Sinne der Erfindung werden Maschinen zum Schneiden oder Schweißen mittels Autogentechnik, Plasmaverfahren, oder Lasertechnik verstanden.

Die Führungsschiene kann mehrlagig ausgebildet sein, beispielsweise kann sie zwecks einer Versteifung aus mehreren mit ihren Flachseiten miteinander verschraubten, verklebten oder verschweißten Schienen zusammengesetzt sein.

An dem Maschinenportal sind eine oder mehrere Führungsschienen befestigt, die für eine Vertikalführung oder für eine Horizontalführung für mindestens ein thermisches Bearbeitungswerkzeug dienen. Mit der Führungsschiene kann eine Zahnleiste lösbar oder integral verbunden sein.

Der Einsatz von Abdrückschrauben zur Ausrichtung von Laufschienen, beispielsweise für die Bewegung von Werkzeugmaschinen auf einem Unterbau ist seit langem bekannt. Derartige Laufschienen haben jedoch aufgrund ihrer konstruktiven Form ein hohes Biegewiderstandsmoment in Richtung quer zur Längsachse und sind daher selbsttragend, so dass der Unterbau zu der Formstabilität der Schienenführung keinen entscheidenden Beitrag zu leisten hat.

Im Gegensatz dazu handelt es sich bei einer Führungsschiene im Sinne dieser Erfindung in der Regel um eine vergleichsweise dünne, hochpräzise gefertigte Leiste, die im Zusammenspiel mit dem daran geführten Laufwagen und einem Wälzlager eine Linearführung bildet. Aus Fertigungs- und Kostengründen weisen derartige Führungsschienen eine geringe Dicke im Vergleich zu Laufschienen auf, was wiederum zu einer relativ geringen Biegesteifigkeit in Richtung quer zur Schienen-Flachseite und zu Verformungen bei Belastung führt. Aus diesem Grund war vor der Erfindung die flächige Anlage der Führungsschiene und damit einhergehend das aufwändige Herrichten der Montagefläche als notwendig erachtet worden, denn erst durch eine ausreichend ebene Montagefläche und die darauf anliegende Führungsschiene konnte eine insgesamt ausreichende Formstabilität der Führung gewährleistet werden.

Die notwendige Formstabilität kann bei der erfindungsgemäßen Brennschneidmaschine beispielsweise durch eine ausreichend dichte Verteilung der Abdrückschrauben über der Länge der Führungsschiene erreicht werden, durch supergehärtete Oberflächen der Abdrückschrauben und der Montagefläche, die einer Verformung unter Last entgegenwirken, durch eine besonders dicke Führungsschiene, oder durch eine Kombination dieser Maßnahmen, die jedoch allesamt kostenaufwändig sind. Alternativ oder ergänzend dazu wird der Unterbau (die Montagefläche) nach dem Ausrichten der Führungsschiene an die Unterseite derselben "herangeschoben", indem der zwischen Führungsschiene und Montagefläche verbleibende Spalt ganz oder teilweise mit einem Füllmittel ausgefüllt wird.

Die letztgenannte Vorgehensweise, bei der ein zwischen der Führungsschiene und der Montagefläche verbleibender Spalt ganz oder teilweise mit einer Füllmasse verfüllt ist, wird aus Kostengründen bevorzugt.

Als Füllmassen kommen Vergussmassen, wie Fließ- und Polymerbetone, Epoxidharze und ähnliches oder auch Klebemittel in Frage. Durch diese Maßnahme wird die erforderliche Formstabilität auch bei den üblichen Führungsschienen mit geringer Dicke gewährleistet, und die Füllmittel tragen darüber hinaus zur Schwingungsdämpfung bei, was sich insbesondere bei hoher Maschinendynamik vorteilhaft auf die Schnittgüte auswirkt. Außerdem trägt das Füllmittel zum Abtrag parallel zur Montagefläche wirkender Scherkräfte bei.

Vorzugsweise sind Abdrückschrauben beidseitig längsseits der Schraubenreihe vorgesehen.

Diese Ausführungsform der erfindungsgemäßen Brennschneidmaschine erlaubt eine flexible Einstellung des Kippwinkels der Führungsschiene mittels der beiderseits der Reihe der Befestigungsschrauben angeordneten Abdrückschrauben.

Hierbei hat es sich als besonders günstig erwiesen, wenn die Schraubenreihe entlang einer Mittellinie der Führungsschiene verläuft, wobei die Abdrückschrauben in parallel zur Mittellinie verlaufenden Abdrückschrauben-Reihen auf die Führungsschiene einwirken.

Die Anordnung der Befestigungsschrauben entlang der Mittellinie der Führungsschiene gewährleistet ein etwa gleiches Kippverhalten der Schiene in die eine und die andere Kipprichtung und vereinfacht so das Einstellen des Kippwinkels und das Ausrichten der Führungsschiene.

Hierzu trägt auch bei, wenn die Lochreihen den gleichen Abstand von der Mittellinie haben.

Die Hebelwirkung beim Justieren und Fixieren der Führungsschiene in der Kippebene wird mit zunehmendem Abstand der Lochreihen von der Schraubenreihe größer. Von daher hat es sich bewährt, wenn der Abstand der Lochreihen von der Schraubenreihe mindestens 5 mm beträgt.

Vorzugsweise sind die Abdrückschrauben über die Länge der Führungsschiene gleichmäßig verteilt.

Die Anordnung äquidistanter Abdrückschrauben vereinfacht die Herstellung des Lochbildes in der Führungsschiene oder im Maschinenportal und sie vereinfacht das Ausrichten derselben.

Es hat sich besonders bewährt, die Abdrückschrauben in die Führungsschiene einzusetzen.

Hierbei werden die Abdrückschrauben von der Vorderseite der Führungsschiene her eingestellt. Da die Vorderseite der Führungsschiene in der Regel einfacher zugänglich als der rückwärtige Bereich des Maschinenportals, an dem die Führungsschiene befestigt ist, werden dadurch die Montage- und Ausrichtarbeiten erleichtert.

Es hat sich als besonders vorteilhaft erwiesen, wenn jeder Befestigungsschraube mindestens eine Abdrückschraube zugeordnet ist.

Dadurch, dass jeder Befestigungsschraube eine Abdrückschraube zugeordnet ist, wird ein exaktes Ausrichten der Führungsschiene in der Kippebene vereinfacht. Es hat sich dabei als besonders günstig erwiesen hat, wenn jeder Befestigungsschraube zwei Abdrückschrauben zugeordnet sind.

Die Befestigungsschrauben und die Abdrückschrauben können - in Richtung der Längsachse der Führungsschiene gesehen - nebeneinander oder versetzt zueinander angeordnet sein.

In einer besonders bevorzugten Ausgestaltung der erfindungsgemäßen Brennschneidmaschine umfasst die Montagefläche einen an dem Maschinenportal anliegenden Stützkörper.

Das Maschinenportal ist aus Gewichts- und Kostengründen häufig dünnwandig ausgebildet. Bei dünnwandiger Ausbildung ist die Eignung des Maschinenportals als Widerlager für eine Abdrückschraube oder für die Herstellung der Gewinde für die Abdrückschrauben eingeschränkt. Durch einen zusätzlichen Stützkörper wird die Stärke und die Steifigkeit des Maschinenportals im Einwirkungsbereich der Abdrückschrauben erhöht. Der Stützkörper ist zwischen Maschinenportal und Führungsschiene angeordnet. Im einfachsten Fall besteht der Stützkörper aus einer Platte, die im Bereich der Führungsschiene an dem Maschinenportal befestigt ist. Er kann aber auch als Stützgerüst ausgebildet und aus mehreren Teilstücken zusammengesetzt sein.

In einer ersten bevorzugten Ausgestaltung der erfindungsgemäßen Brennschneidmaschine sind Befestigungsschrauben und Abdrückschrauben mit einem Regelgewinde versehen.

Regelgewinde sind vergleichsweise einfach und preisgünstig in ihrer Herstellung, so dass sich bei dieser Ausführungsform ein entsprechender Fertigungs- und Kostenvorteil ergibt.

Bei einer gleichermaßen bevorzugten Ausgestaltung der erfindungsgemäßen Vorrichtung sind die Abdrückschrauben mit einem Feingewinde versehen.

Ein Feingewinde ist zwar aufwändiger in der Herstellung als ein Regelgewinde, dafür ermöglicht es aber eine feinere Einstellung des Kippwinkels der Führungsschiene, und erleichtert insoweit die Ausrichtung derselben, was sich insbesondere bei den Abdrückschrauben vorteilhaft auswirkt.

Es hat sich als günstig erwiesen, wenn die Abdrückschrauben mit einem Sicherungsmittel gegen Lösen gesichert sind.

Durch die Sicherung gegen Lösen wird ein Dejustieren der Führungsschiene vermieden.

Als besonders günstig hat es sich dabei erwiesen, wenn das Sicherungsmittel eine Kontermutter umfasst.

Ein derartiges Sicherungsmittel ist preiswert und einfach anbringbar.

Im Hinblick hierauf hat es sich als besonders vorteilhaft erwiesen, wenn die Kontermutter in einem zwischen der Führungsschiene und der Montagefläche verbleibenden Spalt eingesetzt ist, wobei die Abdrückschrauben als versenkbare Madenschrauben ausgebildet sind, und die Befestigungsschrauben in der Führungsschiene versenkt sind.

Bei dieser Ausführungsform der erfindungsgemäßen Brennschneidmaschine sind die Befestigungs- und Ausrichtungsmittel versenkt, so dass eine Führungsschiene mit im Wesentlichen ebener Oberseite ohne störende Erhebungen vorliegt.

Alternativ oder ergänzend hierzu umfasst bei einer weiteren bevorzugten Ausgestaltung der erfindungsgemäßen Brennschneidmaschine das Sicherungsmittel eine die Abdrückschrauben fixierende Verguss- oder Klebemasse.

Die Verguss- oder Klebemasse ist besonders einfach aufzubringen und sie gewährleistet auch bei hoher Maschinendynamik eine feste Fixierung der Führungsschiene.

Im Hinblick hierauf hat es sich als besonders günstig erwiesen, wenn die Vergussoder Klebemasse einen zwischen der Führungsschiene und der Montagefläche verbleibenden Spalt ausfüllt.

Die Verguss- oder Klebemasse trägt hierbei zur Schwingungsdämpfung bei, was sich insbesondere bei hoher Maschinendynamik vorteilhaft auf die Schnittgüte auswirkt.

Die oben angegebene Aufgabe wird hinsichtlich der Vorrichtung zum Ausrichten der Führungsschiene erfindungsgemäß dadurch gelöst, dass das Maschinenportal mit Rastmitteln für ein daran fixierbares Ausrichtwerkzeug versehen ist, das ein Gestell mit einem dreh- oder verschiebbar gelagerten und an der Führungsschiene angreifenden Werkzeug aufweist, mittels dem in Abhängigkeit von seiner Drehung oder Verschiebung die Führungsschiene im Bereich der Befestigungsschrauben in einer parallel zur Schienen-Längsachse und senkrecht zur Kippebene verlaufenden Verschiebeebene verschiebbar ist.

Das Ausrichtwerkzeug dient zum Ausrichten der Führungsschiene durch Verschieben in einer Verschiebeebene. Diese verläuft im Wesentlichen parallel zur Montagefläche in einer Richtung parallel zur Schienen-Längsachse und senkrecht zur Kippebene.

Das Maschinenportal ist für diesen Zweck mit Rastmitteln versehen, an denen ein Ausrichtwerkzeug fixiert wird. Die Rastmittel sind dabei jeweils einer oder mehreren Befestigungsschrauben zugeordnet, derart, dass ein in den Rastmitteln fixiertes Ausrichtwerkzeug im Bereich der Befestigungsschrauben an der Führungsschiene angreift. Die Führungsschiene ist mittels des Ausrichtwerkzeuges in der Verschiebeebene vor dem Anziehen der jeweiligen Befestigungsschraube verschiebbar. Erst nachdem die Führungsschiene in der Verschiebeebene ausgerichtet ist, werden die jeweilige Befestigungsschraube oder die Befestigungsschrauben endfest angezogen.

Hierbei haben sich Ausführungsvarianten der erfindungsgemäßen Vorrichtung, die sich hinsichtlich des Angriffs des Werkzeugs an der Führungsschiene unterscheiden als gleichermaßen vorteilhaft erwiesen. Bei der einen Ausführungsvariante greift das Werkzeug in eine Aufnahme ein, die in der Führungsschiene ausgebildet ist, bei der anderen Ausführungsvariante umgreift das Werkzeug die Führungsschiene an ihren Längsseiten.

Hinsichtlich der erstgenannten Ausführungsvariante hat es sich besonders bewährt, wenn die Führungsschiene mit länglichen, sich in Schienen-Längsachse erstreckenden Aufnahmen versehen ist, in denen jeweils eine Befestigungsschraube mindestens teilweise versenkt ist, und dass das Werkzeug eine beidseitig offene Hülse umfasst, die um ihre Längsachse drehbar gelagert ist und deren unteres Ende eine Außenwandung aufweist, welche bei Drehung um die Hülsen-Längsachse einen in radialer Richtung wirkenden Exzenter bildet, und wobei die Abmessungen des Werkzeugs so gewählt sind, dass bei angesetztem Gestell das untere Ende der Hülse die Befestigungsschraube umgibt und deren Außenwandung bei Drehung um die Hülsen-Längsachse gegen die Innenwandung der Aufnahme drückt.

Das Werkzeug weist hierbei eine drehbar gelagerte Hülse auf, die einerseits an dem am Maschinenportal fixierten Gestell drehbar gehalten wird, und die andererseits in eine längliche Aufnahme, zum Beispiel in eine Einfräsung, hineinragt, in welcher die Befestigungsschraube sitzt. Die Hülse ist an ihrem unteren Ende als Exzenter ausgebildet, so dass sie bei einer Drehung um die Hülsen-Längsachse gegen die Innenwandung der Aufnahme zu liegen kommt und dadurch infolge der Exzenterwirkung die Führungsschiene in der Verschiebeebene und senkrecht zur Schienen-Längsachse verschiebt.

Das Verdrehen der Hülse erfolgt beispielsweise mit einem Schraubenschlüssel oder mit einem an der Hülse angebrachten Hebel. Gleichzeitig kann durch die Innenbohrung der Hülse hindurch ein Schraubenschlüssel an der Befestigungsschraube angesetzt werden und diese nach dem Ausrichten der Führungsschiene in der Verschiebeebene fest angezogen werden.

Somit kann mittels des Ausrichtwerkzeugs die Führungsschiene im Bereich jeder Befestigungsschraube oder im Bereich ausgewählter Befestigungsschrauben in der Verschiebeebene verschoben und damit die relevante Führungsfläche horizontal oder vertikal ausgerichtet werden, bevor die jeweilige Befestigungsschraube angezogen wird.

In einer vorteilhaften Ausgestaltung dieser Ausführungsvariante ist die Hülse mit einem Kragen mit planer Unterseite versehen ist, die bei angesetztem Gestell auf der Führungsschiene aufliegt.

Der Kragen der Hülse erleichtert das Verschieben der Führungsschiene in der Verschiebeebene, da er ein Verkippen der Führungshülse verhindert.

In einer alternativen und gleichermaßen bevorzugten Ausführungsform weist die erfindungsgemäße Vorrichtung ein Werkzeug auf, das eine die Führungsschiene seitlich umgreifende Gabel aufweist, die mittels Spindel oder Schraube senkrecht zur Schienen-Längsachse verschiebbar ist.

Hierbei umgreift eine am Werkzeug gehaltene Gabel die Führungsschiene und bewegt diese in die gewünschte Position, wobei die Gabel mittels Schraube oder Spindel verschoben wird. Diese Ausführungsform der erfindungsgemäßen Vorrichtung hat gegenüber der vorher beschriebenen Ausführungsform den Vorteil, dass in der Führungsschiene keinerlei Aufnahmen für den Eingriff des Werkzeugs erzeugt werden müssen.

Es hat sich als besonders vorteilhaft erwiesen, wenn die Rastmittel des Maschinenportals in Form einer Anordnung von Bohrungen ausgebildet und jeweils einer Befestigungsschraube zugeordnet sind.

Hierbei ist jeder Befestigungsschraube jeweils auch eine Justiermöglichkeit für die Ausrichtung der Führungsschiene zugeordnet, so dass die Führungsschiene an jeder Stelle nach Bedarf flexibel ausgerichtet werden kann.

Ausführungsbeispiele sind in der Zeichnung dargestellt und werden im Folgenden näher erläutert. In der Zeichnung zeigen im einzelnen anhand schematischer Darstellungen
- **Figur 1**: eine erfindungsgemäße Brennschneidmaschine mit zu bearbeitendem Werkzeug in einer Vorderansicht,
- **Figur 2**: einen Ausschnitt von Figur 1 mit einer vergrößerten Darstellung von Maschinenportal und darauf montierter Führungsschiene mit integrierter Zahnleiste in einer Seitenansicht,
- **Figur 3**: die Führungsschiene von Figur 2 in einer Draufsicht,
- **Figur 4**: eine Ausführungsform eines Hilfswerkzeugs zum Ausrichten der Führungsschiene, und
- **Figur 5**: einen Ausschnitt einer Brennschneidmaschine mit Führungsschiene und am Maschinenportal angesetztem Ausrichtwerkzeug zur Ausrichtung der Führungsschiene anhand einer technischen Zeichnung in einer Seitenansicht.

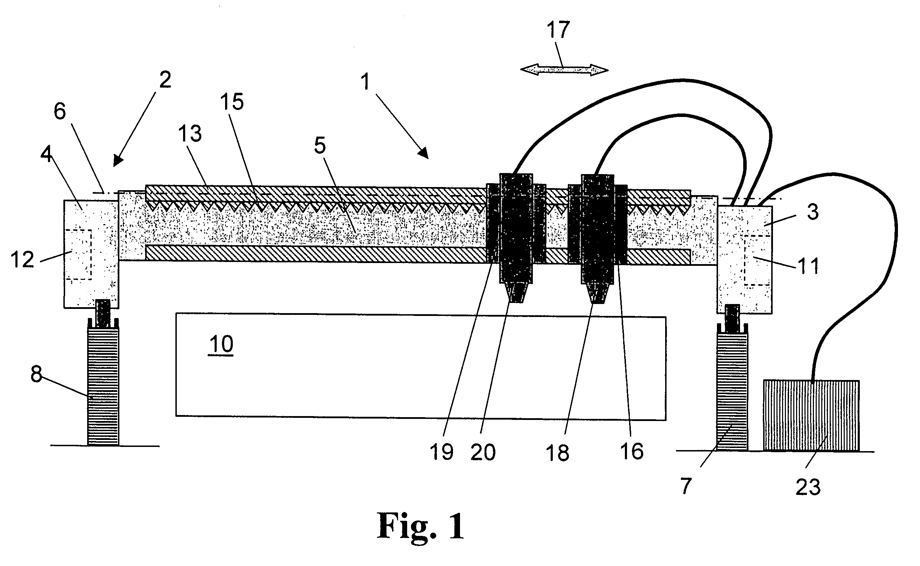

Der Ausführungsform der erfindungsgemäßen Brennschneidmaschine gemäß **Figur 1** ist insgesamt die Bezugsziffer 1 zugeordnet. Die Brennschneidmaschine 1 weist ein Maschinenportal 2 auf, das sich im Wesentlichen aus einem ersten Kreuzwagen 3 und einem zweiten Kreuzwagen 4 sowie einem Querholm 5 zusammensetzt. Die beiden Kreuzwagen 3 und 4 weisen Rollen auf, mittels denen sie auf Schienen 7 bzw. 8 in einer Richtung senkrecht zur Blattebene verfahrbar sind. Die Kreuzwagen 3 bzw. 4 und der Querholm 5 sind fest miteinander verbunden. Der Abstand der beiden Schienen 7 und 8 bestimmt die maximale Breite und ihre Länge bestimmt die Länge des zu bearbeitenden Werkstücks. Der Antrieb der Kreuzwagen 3 und 4 erfolgt über zwei Motoren 11 bzw. 12 mittels Zahnrad und Zahnleiste.

An dem Querholm 2 sind über eine angeschweißte Stützplatte 50 (siehe Figur 5) Führungsschienen 13 bzw. 14 angeschraubt, wobei die Führungsschiene 13 mit integraler Zahnleiste 15 ausgebildet ist. Die Längsachse der Führungsschiene 13 ist mit der Bezugsziffer 26 bezeichnet. Ein mit einem Antrieb versehener Querwagen 16 wird auf den Führungsschienen 13, 14 reversierend beweglich in Richtung senkrecht zur Fahrtrichtung des Maschinenportals 2 geführt. Die Bewegungsrichtung des Querwagens 16 ist in der Figur 1 mittels des Blockpfeils 17 symbolisiert. Für seine reversierende Bewegung ist der Querwagen 16 mit einem Antrieb versehen, der ein mit der Zahnleiste 15 zusammenwirkendes Zahnrad aufweist. Der Querwagen 16 trägt einen ersten Brenner 18, beispielsweise einen Autogen- oder Plasmabrenner oder einen Laser. Dieser erste Brenner 18 ist nach unten gerichtet, um das Werkstück 10 bearbeiten zu können. Mit dem Querwagen 16 ist ein weiterer Brennerwagen 19 ohne eigenen Antrieb gekoppelt. Der Brennerwagen 19 trägt einen weiteren Schneidbrenner 20, der entsprechend dem ersten Brenner 18 ausgebildet ist.

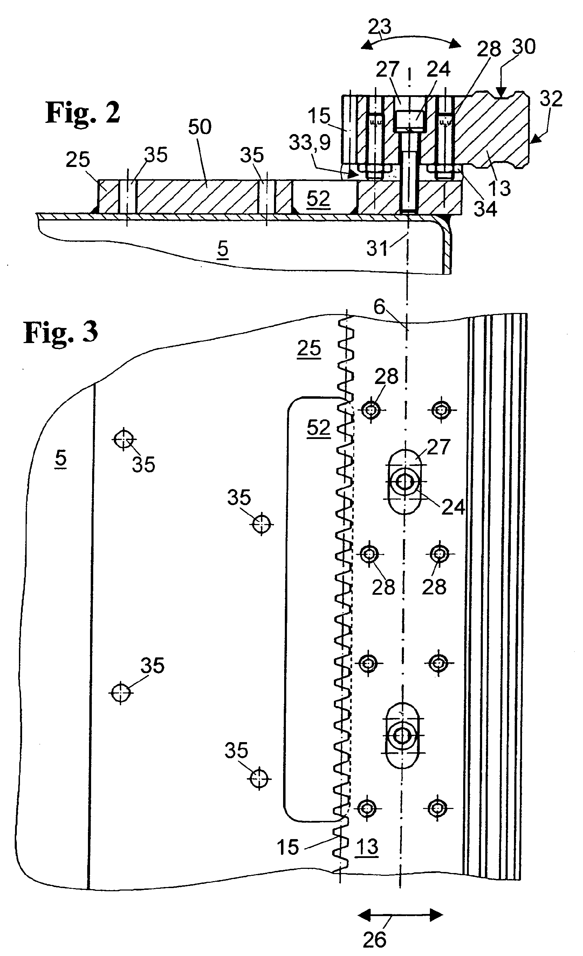

Sofern in den Figuren 2 bis 5 dieselben Bezugsziffern wie in Figur 1 verwendet sind, so sind damit baugleiche oder äquivalente Bauteile und Bestandteile bezeichnet, wie sie oben anhand der Beschreibung der ersten Ausführungsform der erfindungsgemäßen Brennschneidmaschine erläutert sind.

Anhand der **Figuren 2 und 3** wird nachfolgend die Halterung der Führungsschiene 13 auf dem Querholm 2 und deren Ausrichtung beispielhaft beschrieben.

Die Führungsschiene 13 ist mittels Befestigungsschrauben 24 mit Regelgewinde an einer Montagefläche 25 des Querholms 5 angeschraubt. Die Montagefläche 25 wird durch die Oberseite einer Stützplatte 50 gebildet. Die Befestigungsschrauben 24 sind dabei in einer Reihe mit einem äquidistantem Abstand zueinander entlang der Längsachse 26 der Führungsschiene 13 angeordnet und in länglichen Einfräsungen 27 derselben vollständig versenkt.

Beidseitig längsseits der Reihe der Befestigungsschrauben 24 ist die Führungsschiene 13 mit zwei parallelen Reihen von Durchgangsbohrungen 29 mit Feingewinde versehen, die für die Aufnahme von Abdrückschrauben 28 in Form von Madenschrauben ausgebildet sind. Die Durchgangsbohrungen 29 haben jeweils von der Längsachse 26 einen Abstand von 10 mm. Sie sind in Bezug zu den Befestigungsschrauben 24 so versetzt angeordnet, dass jeweils eine Abdrückschraube 28 mittig zwischen zwei benachbarten Befestigungsschrauben 24 angeordnet ist.

Das Ausrichten der Führungsschiene 13 erfolgt in zwei Richtvorgängen, die im Folgenden erläutert werden.

Die Befestigungsschrauben 24 sind zunächst locker angezogen, so dass die Führungsschiene 13 in einer Kippebene, die in Figur 2 durch die Zeichenblattebene gebildet wird, und um eine Kippachse 31, die senkrecht zur Reihe der Befestigungsschrauben 24 verläuft, verkippbar ist. Die Verkippungsbewegung der Führungsschiene 13 ist in Figur 2 durch den Blockpfeil 31b angedeutet.

Die Abdrückschrauben 28 dienen zur Ausrichtung der Führungsschiene 13 in der Kippebene 31 in einem ersten Richtvorgang. Hierzu werden die Abdrückschrauben 28 so weit gegen die Montagefläche 25 geschraubt, dass die Führungsschiene 13 in der Darstellung von Figur 2 eine exakt horizontal verlaufende Oberseite 30 und dementsprechend eine exakt vertikal verlaufende Führungsfläche 32 aufweist.

Zwischen der Führungsschiene 13 und der Montagefläche verbleibt ein Spalt 33, in den Kontermuttern 34 zur Fixierung der Abdrückschrauben 28 eingesetzt sind. Nach dem Ausrichten der Führungsschiene 13 wird der Spalt 33 mit einer Vergussmasse aus Kunststoff gefüllt, die zur Schwingungsdämpfung bei hoher Maschinendynamik beiträgt.

Nach dem ersten Richtvorgang durch Verkippen der Führungsschiene 13 in der Kippebene wird die Führungsschiene 13 in einem zweiten Richtvorgang über ihre gesamte Länge in der Waagerechten (in der Darstellung von Figur 1) justiert, wie dies im Folgenden näher erläutert wird. Erst danach werden die Befestigungsschrauben 24 endfest angezogen.

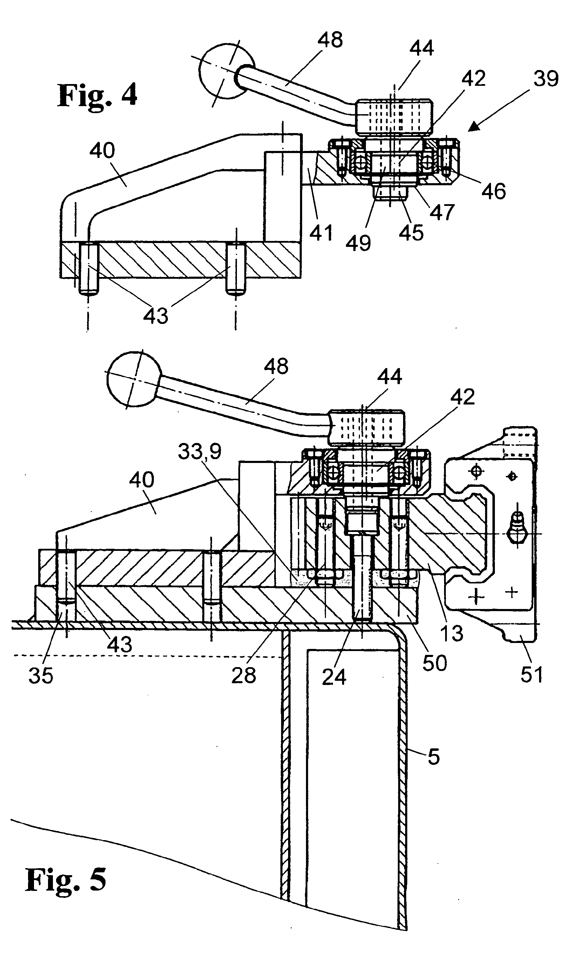

Zur Durchführung des weiteren Richtvorgangs sind in vorgegebenem Abstand und Winkel zu den Befestigungsschrauben 24 jeweils Rastbohrungen 35 zur Aufnahme eines Hilfswerkzeuges auf dem Querholm 5 vorgesehen. Der Aufbau und Einsatz des Hilfswerkzeuges wird weiter unten anhand der Figuren 3 und 4 beschrieben.

Nachdem die Führungsschiene 13 korrekt ausgerichtet ist und alle Schrauben angezogen sind, wird der verbliebene Spalt 33 soweit wie möglich mit einer Vergussmasse 9 aus Fließbeton aufgefüllt, wodurch die Montagefläche 25 an die Unterseite der Führungsschiene 13 "herangeführt" und die Formstabilität und die Scherfestigkeit der Linearführung erhöht wird. In den Figuren 2 und 5 sind die den Spalt 33 ausfüllenden Massen (9) durch grau schattierte Flächen angedeutet.

Das in **Figur 4** dargestellte Ausrichtwerkzeug 39 besteht aus einem Gestell 40, das mit einem Ausleger 41 versehen ist, der ein Kugellager 46 aufweist, in dem eine beidseitig offene Hülse 42 drehbar gelagert ist (Innenbohrung 49). Das Gestell 40 ist mit Zapfen 43 versehen, die in die Bohrungen 35 des Querholms 5 bzw. in die der Stützplatte 50 einrastbar sind, so dass das Ausrichtwerkzeug 39 gegenüber jeder Befestigungsschraube 24 eine vorgegebene Position einnimmt.

Das untere Ende der Hülse 42 weist eine Außenwandung auf, die bei Drehung um die Hülsen-Längsachse 44 einen in radialer Richtung wirkenden Exzenter 45 bildet. Oberhalb des Exzenters 45 weist die Hülse 42 einen Kragen 47 mit planer Unterseite auf. Zur Drehung um ihre Längsachse ist am oberen Ende der Hülse 42 ein Handhebel 48 vorgesehen. Durch die Innenbohrung 49 der Hülse 42 kann ein zu den Befestigungsschrauben 24 passender Innenkontur-Schlüssel eingeführt werden.

Bei einem in den Rastbohrungen 35 eingerastetem Gestell 40 kommt die Hülse 42 in der Einfräsung 27 zu liegen, wobei die Innenbohrung 49 den Kopf der Befestigungsschraube 24 umgibt. Durch Drehen der Hülse 42 um ihre Längsachse 44 drückt der Exzenter 45 gegen die Innenwandung der Einfräsung 27 und verschiebt dadurch die Führungsschiene 13 in einer Verschiebeebene, die in der Darstellung von Figur 2 senkrecht und die in Figur 3 parallel zur Zeichenblattebene verläuft und wie dies in Figur 3 durch den Richtungspfeil 26b angedeutet ist.

Nachdem die Führungsschiene 13 durch Drehung der Hülse 42 im Bereich der jeweiligen Befestigungsschraube 24 ihre korrekte Lage eingenommen hat, wird die betreffende Befestigungsschraube 24 mittels eines über die Innenbohrung 49 eingeführten Innenkontur-Schlüssels angezogen. Durch Wiederholen dieser Maßnahme an im Bereich weiterer Befestigungsschrauben 24 - soweit dies notwendig ist -wird die Führungsschiene 13 über ihre gesamte Länge exakt horizontal verlaufender Längsachse 26 ausgerichtet und gleichzeitig wird sie durch Anziehen der Befestigungsschrauben 24 in dieser Lage fixiert.

In einer alternativen Ausführungsform weist das Ausrichtwerkzeug anstelle des Auslegers und der daran drehbar gelagerten Hülse eine Gabel auf, welche die Führungsschiene 13 seitlich umgreift und die mittels Spindel quer zur Längsachse 26 verschiebbar ist. Bei dieser Ausführungsform kann auf die Einfräsungen 27 verzichtet werden.

Zur Einstellung und Überprüfung der Ausrichtung der Führungsschiene 13 wird auf den Linearführungsschlitten 51 (siehe Figur 5) ein Werkzeug geschraubt, welches einen Diodenlaser und einen Monitor trägt. Der Diodenlaser ist mit seinem Strahl genau parallel zur Aufnahme der Führungsschiene 13 ausgerichtet. In einem Abstand von einigen Metern nach dem Ende der Führungsschiene 13 ist eine Kamera angebracht, in deren Objektiv die Laserdiode einstrahlt.

Mit der Ausrichtung der vormontierten Führungsschiene 13 wird an dem der Kamera abgewandten Ende der Führungsschiene 13 begonnen. Der Monitor zeigt die Lage des Leuchtpunktes des Diodenlasers im Bildschirm an. Hier wird nun ein Zielkreuz mit der Idealausrichtung überlagert. Verfährt man den Linearführungsschlitten 51 vom Ort der ersten Befestigungsschraube 24 zur Zweiten, bleibt im Idealfall der Leuchtpunkt im Zentrum des Zielkreuzes. In diesem Fall ist ein Nachjustieren der Führungsschiene 13 an dieser Stelle nicht erforderlich. Verfährt jedoch der Punkt im Zielkreuz, so sind die Abdrückschrauben 28 so zu verstellen, dass der Laser wieder in das Zentrum zurückwandert. So wird nun von Befestigungsschraube 24 zu Befestigungsschraube 24 verfahren, bis die Justage abgeschlossen ist.

In einer Ausbaustufe wertet eine Bilderkennung die Abweichung an jedem Messpunkt aus und gibt dem Monteur auf dem Monitor exakt an, welche Abdrückschraube 28 um welchen Betrag und mit welchem Vorzeichen zu verstellen ist. Verfährt man nach der Justage über die gesamte Länge der Führungsschiene 13, gibt die jeweiligen Schraubpunkte an und speichert das jeweilige Messergebnis, so kann automatisch ein Abnahme-Messprotokoll mit den zulässigen Abweichungen innerhalb der Toleranz ausgegeben werden.

Während beim bisher eingesetzten Ausrichtverfahren die Justage einer Schienenlänge von etwa einem Meter eine mehrstündige Arbeitszeit erfordert, gelingt es mittels der Erfindung und dem beschriebenen Ausrichtverfahren, in der gleichen Zeit eine mehrere Meter lange Führungsschiene zu justieren.

Da das Ausrichten der Führungsschiene 13 bei der erfindungsgemäßen Brennschneidmaschine im Wesentlichen mittels der Abdrückschrauben 28 erfolgt, ist eine aufwändige Bearbeitung von Führungsschiene 13 und Montagefläche 25 nicht erforderlich. Daher handelt es sich bei der Führungsschiene 13 um ein handelsübliches Bauteil des Typs "Kompaktführung GSR-R" der Firma THK, wobei lediglich die für die eigentliche Führung der Querwagen notwendigen Flächen der Führungsschiene geschliffen sind. Auch auf eine besonders exakte Bearbeitung der Montagefläche 25 kann verzichtet werden.

Bei der in Figur 5 im Ausschnitt dargestellten Ausführungsform der erfindungsgemäßen Brennschneidmaschine 1 ist die Führungsschiene 13 erkennbar, an welcher der Linearführungsschlitten 51 für den Querwagen 16 (in Figur 1 dargestellt) gleitbar gehalten wird. An dem Querholm 2 ist eine Stützplatte 50 angeschweißt, die aus einer 10 mm starken, kaltgezogenen Stahlplatte besteht. Die Stützplatte 50 dient zur Verstärkung des vergleichsweise dünnwandigen Querholms 2.Auf ihr ist die Führungsschiene 13 mittels Befestigungsschrauben 24 angeschraubt, so dass ihre der Führungsschiene 13 zugewandte Oberfläche eine Montagefläche im Sinne der vorliegenden Erfindung bildet. Hierzu ist die Führungsschiene 13 mit einer entlang ihrer Längsachse verlaufenden Bohrungsreihe (diese erstreckt sich bei der Ansicht nach Figur 5 senkrecht zur Zeichenblattebene), und die Stützplatte 50 mit einer entsprechenden Reihe von Gewindebohrungen mit Regelgewinde versehen. Beidseitig zu den Befestigungsschrauben 24 sind jeweils mit Kontermutter 34 gesicherte Abdrückschrauben 28 in Form von Madenschrauben vorgesehen, die die Führungsschiene 13 gegen die Stützplatte 50 abdrücken, und mittels denen die Führungsschiene 13 in der Kippebene (das ist in dieser Ansicht die Zeichenblattebene) ausgerichtet werden kann, wie dies oben näher erläutert ist.

Der Spalt zwischen der Führungsschiene 13 und der Stützplatte ist mit einer Klebemasse 9 verfüllt, welche zur Versteifung und gleichzeitig zur Fixierung der Kontermuttern 34 der Abdrückschrauben 24 dient. Weiterhin weist die Stützplatte Rastbohrungen 35 zum Einrasten der Zapfen 43 des Ausrichtwerkzeug 39 auf, so dass dieses gegenüber der Befestigungsschraube 24 eine vorgegebene Position einnimmt. Die Funktion und Arbeitsweise des Hilfswerkzeugs 39 ist oben anhand den Figuren 2 bis 4 näher erläutert.

## Patentansprüche

1. Brennschneidmaschine mit einem verfahrbaren Maschinenportal, das eine Montagefläche aufweist, an der eine vertikal und horizontal ausgerichtete Führungsschiene, entlang der mindestens ein thermisches Bearbeitungswerkzeug senkrecht zur Fahrtrichtung reversierend beweglich geführt wird, und die mittels Befestigungsschrauben, die in einer entlang der Schienen-Längsachse verlaufenden Schraubenreihe angeordnet sind, befestigt ist, **dadurch gekennzeichnet, dass** die Führungsschiene (13; 14) mittels der Befestigungsschrauben (24) in einer senkrecht zur Montagefläche (25) stehenden Kippebene verkippbar an der Montagefläche (25) gehalten wird, und dass zur Ausrichtung der Führungsschiene (13; 14) in der Kippebene Abdrückschrauben (28) entlang der Schraubenreihe vorgesehen sind, welche die Führungsschiene (13; 14) gegen Montagefläche (25) und Befestigungsschrauben (24) abdrücken.

2. Brennschneidmaschine nach Anspruch 1, **dadurch gekennzeichnet, dass** ein zwischen der Führungsschiene und der Montagefläche verbleibender Spalt ganz oder teilweise mit einer Füllmasse verfüllt ist.

3. Brennschneidmaschine nach Anspruch 1 oder 2, **dadurch gekennzeichnet, dass** Abdrückschrauben (28) beidseitig längsseits der Schraubenreihe vorgesehen sind.

4. Brennschneidmaschine nach Anspruch 3, **dadurch gekennzeichnet, dass** die Schraubenreihe entlang einer Mittellinie (26) der Führungsschiene (13; 14) verläuft und dass die Abdrückschrauben (28) in parallel zur Mittellinie (26) verlaufenden Abdrückschrauben-Reihen auf die Führungsschiene einwirken.

5. Brennschneidmaschine nach Anspruch 4, **dadurch gekennzeichnet, dass** die beiden Abdrückschrauben-Reihen den gleichen Abstand von der Mittellinie (26) haben.

6. Brennschneidmaschine nach einem der vorhergehenden Ansprüche, **dadurch gekennzeichnet, dass** die Abdrückschrauben (28) über die Länge der Führungsschiene (13; 14) gleichmäßig verteilt sind.

7. Brennschneidmaschine nach einem der vorhergehenden, **dadurch gekennzeichnet, dass** die Abdrückschrauben (28) in die Führungsschiene (13; 14) eingesetzt sind.

8. Brennschneidmaschine nach einem der vorhergehenden Ansprüche, **dadurch gekennzeichnet, dass** jeder Befestigungsschraube (24) mindestens eine Abdrückschraube (28) zugeordnet ist.

9. Brennschneidmaschine nach Anspruch 8,**dadurch gekennzeichnet, dass** jeder Befestigungsschraube (24) zwei Abdrückschrauben (28) zugeordnet sind.

10. Brennschneidmaschine nach einem der vorhergehenden Ansprüche, **dadurch gekennzeichnet, dass** die Montagefläche (25) einen an dem Maschinenportal (2; 3; 4; 5) anliegenden Stützkörper (50) umfasst.

11. Brennschneidmaschine nach einem der vorhergehenden Ansprüche, **dadurch gekennzeichnet, dass** Befestigungsschrauben (24) und Abdrückschrauben mit einem Regelgewinde versehen sind.

12. Brennschneidmaschine nach einem der Ansprüche 1 bis 10, **dadurch gekennzeichnet, dass** die Abdrückschrauben (28) mit einem Feingewinde versehen sind.

13. Brennschneidmaschine nach einem der vorhergehenden Ansprüche, **dadurch gekennzeichnet, dass** die Abdrückschrauben (28) mit einem Sicherungsmittel gegen Lösen gesichert sind.

14. Brennschneidmaschine nach Anspruch 13, **dadurch gekennzeichnet, dass** das Sicherungsmittel eine Kontermutter (34) umfasst.

15. Brennschneidmaschine nach Anspruch 14, **dadurch gekennzeichnet, dass** die Kontermutter (34) in einem zwischen der Führungsschiene (13; 14) und der Montagefläche (25) verbleibenden Spalt (33) eingesetzt ist, dass die Abdrückschrauben (28) als versenkbare Madenschrauben ausgebildet sind, und dass die Befestigungsschrauben (24) in der Führungsschiene (13; 14) versenkt sind.

16. Brennschneidmaschine nach einem der Anspruch 13 bis 15, **dadurch gekennzeichnet, dass** das Sicherungsmittel eine die Abdrückschrauben (28) fixierende Verguss- oder Klebemasse umfasst.

17. Brennschneidmaschine nach Anspruch 16, **dadurch gekennzeichnet, dass** die Verguss- oder Klebemasse einen zwischen der Führungsschiene (13; 14) und der Montagefläche (25) verbleibenden Spalt (33) ausfüllt.

18. Vorrichtung zum Ausrichten der Führungsschiene einer Brennschneidmaschine nach einem der vorhergehenden Ansprüche, **dadurch gekennzeichnet, dass** das Maschinenportal (2; 3; 4; 5) mit Rastmitteln (35) für ein daran fixierbares Ausrichtwerkzeug versehen ist, das ein Gestell (40, 41) mit einem drehoder verschiebbar gelagerten und an der Führungsschiene (13; 14) angreifenden Werkzeug (42; 46; 45; 47) aufweist, mittels dem in Abhängigkeit von seiner Drehung oder Verschiebung die Führungsschiene (13; 14) im Bereich der Befestigungsschrauben (24) in einer parallel zur Schienen-Längsachse (26) und senkrecht zur Kippebene verlaufenden Verschiebeebene verschiebbar ist.

19. Vorrichtung nach Anspruch 18, **dadurch gekennzeichnet, dass** die Führungsschiene (13; 14) eine Aufnahme aufweist, in welches das Werkzeug (42; 46; 45; 47) eingreift, oder dass das Werkzeug die Führungsschiene (13; 14) an ihren Längsseiten umgreift.

20. Vorrichtung nach Anspruch 18 oder 19, **dadurch gekennzeichnet, dass** die Führungsschiene (13; 14) mit länglichen, sich in Schienen-Längsachse (26) erstreckenden Aufnahmen (27) versehen ist, in denen jeweils eine Befestigungsschraube (24) mindestens teilweise versenkt ist, und dass das Werkzeug (42; 46; 45; 47) eine beidseitig offene Hülse (42) umfasst, die um ihre Längsachse (44) drehbar gelagert ist und deren unteres Ende eine Außenwandung aufweist, welche bei Drehung um die Hülsen-Längsachse (44) einen in radialer Richtung wirkenden Exzenter (45) bildet, und wobei die Abmessungen des Werkzeugs (42; 46; 45; 47) so gewählt sind, dass bei angesetztem Gestell (40; 41) das untere Ende der Hülse (42) die Befestigungsschraube (24) umgibt und deren Außenwandung bei Drehung um die Hülsen-Längsachse (44) gegen die Innenwandung der Aufnahme (27) drückt.

21. Vorrichtung nach Anspruch 20, **dadurch gekennzeichnet, dass** die Hülse (42) mit einem Kragen (47) mit planer Unterseite versehen ist, die bei angesetztem Gestell (40; 41) auf der Führungsschiene (13; 14) aufliegt.

22. Vorrichtung nach Anspruch 18 oder 19, **dadurch gekennzeichnet, dass** das Werkzeug eine die Führungsschiene seitlich umgreifende Gabel aufweist, die mittels Spindel oder Schraube senkrecht zur Schienen-Längsachse verschiebbar ist.

23. Vorrichtung nach einem der Ansprüche 18 bis 22, **dadurch gekennzeichnet, dass** die Rastmittel des Maschinenportals (2; 3; 4; 5) in Form einer Anordnung von Bohrungen (35) ausgebildet und jeweils einer Befestigungsschraube (24) zugeordnet sind.
